# FASCICULE DE BREVET EUROPEEN

(11) **EP 3 161 187 B1**
(45) Date de publication et mention de la délivrance du brevet: **11.09.2019**
(21) Numéro de dépôt: 15811198.9
(22) Date de dépôt: 23.06.2015
(51) Int. Cl.: C25C 3/12, C22C 29/12, C25C 7/02, B22F 3/16, B22F 7/00, B22F 7/04, C04B 35/26, C04B 35/626, C22C 1/10, C22C 19/00, C22C 19/03, C22C 29/00, C25C 7/00, B22F 7/02

(54) **MATÉRIAU D'ÉLECTRODE ET SON UTILISATION POUR LA FABRICATION D'ANODE INERTE**
ELEKTRODENMATERIAL UND VERWENDUNG DAVON ZUR HERSTELLUNG EINER INERTEN ANODE
ELECTRODE MATERIAL AND USE THEREOF FOR THE MANUFACTURE OF AN INERT ANODE

(30) Priorité: 26.06.2014 FR 1401435
(43) Date de publication de la demande: 03.05.2017
(73) Titulaire: Elysis Limited Partnership, Montreal, QC H3B 3M5 (CA)
(72) Inventeur: BARTHELEMY, Christian, F-38500 Voiron (FR); BOUVET, Sylvie, F-38470 Vinay (FR); GABRIEL, Armand, F-38120 Le Fontanil-Cornillon (FR); LAURENT, Véronique, F-38120 Saint Egrève (FR); MARMOTTANT, Ariane, F-38140 Charnecles (FR)
(74) Mandataire: Cabinet Beau de Loménie
(86) Numéro de dépôt international: PCT/IB2015/001041
(87) Numéro de publication internationale: WO 2015/198128

(56) Documents cités:
- WO-A1-01/31090
- WO-A1-98/12363
- WO-A1-02/066710
- WO-A2-01/42534
- WO-A2-2004/082355
- US-A- 4 871 438
- US-A- 6 077 415
- US-A1- 2002 092 774
- US-A1- 2003 066 755
- US-A1- 2005 178 658
- US-A1- 2007 056 848
- US-A1- 2011 192 728
- US-B1- 6 372 099
- US-B1- 6 372 119
- N. P. LYAKISHEV ET AL: "Synthesis and testing of uniform and gradient materials for inert anodes used in the electrolysis of cryolite-alumina melts", THEORETICAL FOUNDATIONS OF CHEMICAL ENGINEERING, vol. 41, no. 5, 2007, pages 706-717, XP055185820, ISSN: 0040-5795, DOI: 10.1134/S0040579507050454
- C. HONVAULT ET AL: "Oxidation kinetics of a Ni-Cu based cermet at high temperature", CORROSION SCIENCE, vol. 68, 19 novembre 2012 (2012-11-19), pages 154-161, XP055185839, ISSN: 0010-938X, DOI: 10.1016/j.corsci.2012.11.007
- HAN-BING HE ET AL: "Corrosion of NiFe2O4-10NiO-based cermet inert anodes for aluminium electrolysis", TRANSACTIONS OF NONFERROUS METALS SOCIETY OF CHINA, vol. 23, no. 12, 2013, pages 3816-3821, XP055185841, ISSN: 1003-6326, DOI: 10.1016/S1003-6326(13)62934-9
- R. P. Pawlek: "Inert Anodes: An Update" In: "Essential Readings in Light Metals", 4 février 2014 (2014-02-04), John Wiley & Sons, Inc., Hoboken, NJ, USA, XP055185837, ISBN: 978-1-11-863663-3 pages 1126-1133, DOI: 10.1002/9781118647745.ch150, * le document en entier * & JIAN-YUAN LIU ET AL: "Phase evolution of 17(Cu-10Ni)-(NiFe2O4-10NiO) cermet inert anode during aluminum electrolysis", TRANSACTIONS OF NONFERROUS METALS SOCIETY OF CHINA, vol. 21, no. 3, 1 mars 2011 (2011-03-01), pages 566-572, XP055185821, ISSN: 1003-6326, DOI: 10.1016/S1003-6326(11)60752-8 & US 8 366 891 B2 (NGUYEN THINH TRONG [CH]) 5 février 2013 (2013-02-05)

## Description

L'invention concerne les matériaux d'électrode, et plus particulièrement les anodes destinées à la production d'aluminium par électrolyse. Elle concerne plus précisément les anodes dites « inertes » ou « non-consommables », ainsi que leur préparation et leur utilisation.

La description qui suit se réfère plus spécifiquement à l'utilisation du matériau d'électrode objet de la présente invention en tant qu'anode inerte pour la fabrication de l'aluminium par un procédé d'électrolyse ignée. Cependant, la mention de cette application industrielle dans la description ne limite en aucun cas la portée de l'invention. La présente invention peut concerner d'autres applications industrielles du matériau d'électrode décrit ci-après.

L'aluminium métal est produit industriellement par électrolyse ignée, à savoir par réduction électrolytique de l'alumine en solution dans un bain à base de cryolithe fondue, appelé bain d'électrolyse, selon le procédé de Hall-Héroult. La réduction électrolytique est effectuée dans des cellules d'électrolyse comprenant une cuve d'électrolyse, munie d'éléments cathodiques en carbone, et une ou plusieurs anodes. Le bain d'électrolyse est contenu dans la cuve et les anodes sont partiellement immergées dans le bain d'électrolyse. Le courant d'électrolyse permet de maintenir le bain d'électrolyse à la température requise par effet Joule. La cellule d'électrolyse est régulièrement alimentée en alumine de manière à compenser la consommation d'alumine produite par la réaction d'électrolyse.

Dans la technologie standard, les anodes sont en matériau carboné et l'électrolyse est effectuée à une température typiquement de l'ordre de 950 °C. Les anodes en matériau carboné étant progressivement consommées lors de l'électrolyse, il faut réajuster en continu la hauteur de la partie des anodes qui est immergée dans le bain et intervenir sur la cellule pour effectuer le remplacement des anodes.

En outre, la consommation des anodes :
- produit du gaz carbonique (plus de deux tonnes de dioxyde de carbone par tonne d'aluminium produit), ce qui contribue à l'effet de serre, et
- rejette du dioxyde de soufre du fait de la présence de soufre dans les matières premières utilisées pour la fabrication de l'anode.

Le développement d'une technologie d'électrolyse de l'alumine utilisant des anodes « inertes » ou « non-consommables » cherchant à résoudre ces inconvénients se heurte inévitablement à la difficulté de réaliser des anodes répondant à différents critères de qualité antagonistes.

En effet, les anodes doivent être suffisamment conductrices à la température d'utilisation de façon à ne pas augmenter de manière inappropriée la consommation électrique liée à cette technologie.

Par ailleurs, les anodes doivent résister à la corrosion dans des bains cryolithiques agressifs de façon à avoir une durée de vie suffisante et, de manière à éviter la contamination de l'électrolyte et de l'aluminium en éléments indésirables.

Enfin les anodes doivent être manipulables. Cela impose certaines propriétés mécaniques : des anodes fragiles seraient inutilisables dans des procédés industriels.

Afin de satisfaire ces critères énoncés ci-dessus, à savoir de conductivité, de résistance à la corrosion, ainsi que de solidité, on a proposé d'utiliser des pièces céramiques monolithiques pour la fabrication de ces anodes inertes.

Par exemple, les demandes de brevet WO02/066710, WO02/083992 et US2004/089558 décrivent différentes compositions d'oxydes susceptibles de permettre la réalisation d'anodes inertes céramiques, pour lesquelles la quantité de phase métallique est en général inférieure à 10 % en poids. Cependant la conductivité électrique de ce type d'anode et leurs propriétés mécaniques s'avèrent insuffisantes.

Par ailleurs, on a également proposé d'utiliser des pièces entièrement métalliques pour la fabrication de ces anodes inertes.

Par exemple, les demandes de brevet WO99/36591 et WO00/06803 décrivent de telles anodes inertes qui sont entièrement métalliques. Cependant, la résistance à la corrosion de ces anodes dans les bains cryolithiques reste insuffisante.

Enfin, on a proposé d'utiliser comme matériaux d'électrode des matériaux composites à matrice céramique contenant une ou plusieurs phases métalliques, de façon à combiner les avantages respectifs de la phase métallique et de la phase céramique. De tels matériaux composites, qui contiennent au moins une phase céramique et au moins une phase métallique, sont connus sous la dénomination « matériau cermet ».

Les phases métalliques de ces matériaux cermet permettent d'améliorer les propriétés mécaniques des électrodes ainsi que leur conductivité, tandis que les phases céramiques permettent d'améliorer la résistance à la corrosion dans les bains cryolithiques.

Cependant, le manque de stabilité des différentes phases métallique et céramique au cours d'un passage prolongé de telles anodes en matériau cermet dans les bains cryolithiques tend à limiter leur durée de vie et à provoquer la contamination de l'électrolyte et de l'aluminium.

De nombreuses demandes de brevet concernent ce type d'anode en matériau cermet.

Par exemple, on peut citer la demande internationale WO2004/082355 qui décrit un procédé de fabrication d'une anode inerte en cermet de type NiO-NiFe₂O₄-M comprenant au moins une phase monoxyde de nickel N, une phase spinelle de nickel S contenant du fer et du nickel, et une phase métallique M contenant du cuivre et du nickel, ledit procédé étant caractérisé en ce qu'il comprend :
- la préparation d'un mélange initial incluant au moins un précurseur desdites phases monoxyde N et spinelle S, un précurseur de la phase métallique M et un liant organique, la proportion de liant organique dans le mélange initial étant inférieure à 2,0 % en poids et le précurseur de la phase métallique comprenant une poudre métallique contenant du cuivre et du nickel,
- une opération de mise en forme du mélange, de manière à former une anode crue de forme déterminée,
- une opération de frittage de l'anode crue à une température supérieure à 900 °C dans une atmosphère contrôlée contenant au moins un gaz inerte et de l'oxygène.

Ce procédé qui améliore la fabrication de l'anode en permettant de réduire la quantité de liant ne résout pas entièrement le problème de stabilité de l'anode dans le bain cryolithique. Il a été notamment constaté que la conductivité électrique de la phase spinelle de nickel NiFe₂O₄ diminuait en cours d'électrolyse, ce qui conditionnait la durée de vie de l'anode.

La demande internationale WO2005/035813 décrit un procédé de fabrication d'anode contenant un cermet dans lequel l'un des constituants de l'oxyde est un élément métallique susceptible d'être réduit en tout ou partie lors d'une opération de réduction au cours du procédé de fabrication. Ce procédé qui améliore la fabrication de l'anode en permettant de réduire l'exsudation de métal ne résout pas non plus entièrement le problème de stabilité de l'anode dans le bain cryolithique.

La demande internationale WO01/31090 décrit une anode inerte en cermet comprenant une phase céramique représentée par la formule NiₓFe_{2y}M_{z}O_{(3y+x+z) ± δ}, où M représente au moins un métal choisi parmi Zn, Co, Al, Li, Cu, Ti, V, Cr, Zr, Nb, Ta, W, Mb, Hf et des terres rares, de préférence Zn et/ou Co, x est compris entre 0,1 et 0,99, y est compris entre 0,0001 et 0,9, z est compris entre 0,0001 et 0,5, et δ est compris entre 0 et environ 0,03. Cette anode inerte en cermet contient également une phase métallique, telle que Cu, Ag, Pd, Pt, Au, Rh, Ru, Ir et/ou Os. Une durée de vie compatible avec des conditions d'utilisation industrielles n'est pas démontrée pour ce type d'anode.

La demande de brevet US2003/066755 décrit une anode contenant un coeur métallique en alliage nickel-fer et une couche de métal poreux riche en nickel, dont les porosités contiennent des oxydes, fluorures ou oxyfluorures de fer et nickel.

Ainsi, on relève que les matériaux d'électrode connus de l'état de l'art ne sont pas pleinement satisfaisants pour fabriquer des anodes inertes destinées à la production d'aluminium qui fonctionnent de manière optimale (c'est-à-dire à moindre consommation électrique) et avec une durée de vie acceptable d'un point de vue industriel.

La présente invention se propose de surmonter les inconvénients détaillés ci-dessus que présentent les matériaux d'électrode connus de l'état de l'art.

En effet, les inventeurs de la présente invention ont mis au point de manière tout à fait surprenante un nouveau matériau d'électrode, en particulier un nouveau matériau d'anode inerte en vue de l'utilisation de ladite anode inerte dans la production d'aluminium qui concilie les paramètres antagonistes suivants :
- une conductivité satisfaisante aux conditions de températures habituelles des procédés d'électrolyse ignée, et ce pour ne pas augmenter la consommation électrique liée à cette technologie ;
- une résistance à la corrosion dans les bains cryolithiques habituellement utilisés pour cette électrolyse et qui sont donc agressifs ;
- des propriétés mécaniques appropriées de l'anode inerte en vue de sa manipulation industrielle ;
- une durée de vie de l'anode inerte satisfaisante d'un point de vue industriel (donc essentiellement économique), et améliorée par rapport aux anodes inertes connues de l'état de l'art ;
- la réduction de la contamination de l'aluminium produit par électrolyse, ainsi que du bain d'électrolyse à base de cryolithe fondue.

L'invention a pour premier objet un matériau d'électrode, de préférence un matériau d'anode inerte, comprenant au moins un coeur métallique et un matériau cermet, ledit coeur métallique étant au moins recouvert dudit matériau cermet et ledit matériau cermet formant une couche externe dudit matériau d'électrode qui est destinée à être en contact avec un bain d'électrolyse, plus particulièrement un bain cryolithique, ledit matériau d'électrode se caractérise en ce que :
- ledit coeur métallique comprend au moins un alliage de nickel (Ni) et de fer (Fe), les proportions massiques de Ni et de Fe étant les suivantes :
   - 40 % ≤ Ni ≤ 85 %, de préférence 55 % ≤ Ni ≤ 80 %,
   - 15 % ≤ Fe ≤ 60 %, de préférence 20 % ≤ Fe ≤ 45 %,
- ledit matériau cermet comprend au moins en pourcentages massiques :
   - 45 à 80 % d'une phase d'oxyde de ferrite de nickel de composition NiₓFe_{y}M_{z}O₄ avec 0,60 ≤ x ≤ 0,90 ; 1,90 ≤ y ≤ 2,40 ; 0,00 ≤ z ≤ 0,20 et M étant un métal choisi parmi l'aluminium (Al), le cobalt (Co), le chrome (Cr), le manganèse (Mn), le titane (Ti), le zirconium (Zr), l'étain (Sn), le vanadium (V), le niobium (Nb), le tantale (Ta) et l'hafnium (Hf) ou étant une combinaison de ces métaux,
   - 15 à 45 % d'une phase métallique comprenant au moins un alliage de nickel et de cuivre.

Les inventeurs de la présente invention ont en effet constaté de manière tout à fait surprenante que la composition du matériau d'électrode décrite ci-dessus est particulièrement appropriée pour l'utilisation de ce matériau en tant qu'anode inerte dans les bains cryolithiques au cours de la fabrication d'aluminium par électrolyse ignée.

Le matériau d'électrode selon l'invention a pour caractéristiques essentielles de présenter au moins un coeur métallique et une couche externe formée d'un matériau cermet, ladite couche externe de matériau cermet est destinée à être en contact avec un bain d'électrolyse, plus particulièrement un bain cryolithique, à savoir lorsque l'anode inerte fabriquée à partir de ce matériau d'électrode est immergée dans un bain d'électrolyse à base de cryolithe au cours d'une électrolyse.

Les différents constituants du matériau d'électrode selon l'invention et leurs quantités respectives ont été choisis de manière optimale, afin que le coeur métallique et le matériau cermet exercent des effets synergiques entre eux de telle sorte qu'on obtienne, à partir de ce matériau d'électrode, une anode inerte satisfaisant pleinement les exigences précitées de conductivité, de résistance à la corrosion et de solidité qu'on attend d'anodes inertes utilisées dans la production d'aluminium, par exemple par électrolyse ignée.

En particulier, il convient de noter que lorsque le matériau d'électrode selon l'invention est utilisé en tant qu'anode inerte pour la fabrication d'aluminium dans un bain cryolithique, ledit matériau présente la particularité remarquable et très avantageuse que sa résistance à la corrosion se met en oeuvre et se maintient au cours de l'électrolyse.

Les effets synergiques entre le coeur métallique et le matériau cermet font l'objet de la description ci-dessous.

Dans le matériau d'électrode selon l'invention, il se produit les interactions suivantes :
- d'une part, le coeur métallique :
   - agit comme un réservoir qui alimente le matériau cermet en fer et en nickel, ledit matériau cermet ayant tendance à s'appauvrir en ces éléments, et
   - protège le matériau cermet pour qu'il ne subisse pas de modification chimique ou structurelle qui le rendrait moins conducteur et moins résistant à la corrosion.
- d'autre part, le matériau cermet agit comme un tampon chimique qui empêche la dissolution du matériau d'électrode dans un bain cryolithique, et ce tout en assurant une conductivité électrique élevée. Le matériau cermet protège le coeur métallique contre la corrosion induite par la présence de fluor et d'oxygène dans le bain cryolithique. En d'autres termes, le matériau cermet évite que l'anode ne se dissolve ou se passive.

Nous décrivons ci-dessous plus amplement les multiples avantages procurés par les constituants du matériau d'électrode selon l'invention, ainsi que les interactions entre ces constituants qui produisent des effets synergiques appropriés pour les applications industrielles de ce matériau d'électrode que sont notamment la production d'aluminium.

Tout d'abord, grâce à la composition du coeur métallique détaillée ci-dessus, le coeur métallique assure une bonne conductivité électrique du matériau d'électrode selon l'invention.

Les alliages à base de Ni-Fe sont connus comme étant de bons alliages pour l'utilisation en tant qu'anode à hautes températures, par exemple aux températures d'électrolyse ignée.

Le pourcentage massique en fer compris entre 15 % et 60 % que comprend le coeur métallique est particulièrement adéquat pour que le coeur métallique puisse alimenter en fer le matériau cermet.

En effet, au cours de l'électrolyse, le matériau cermet peut perdre du fer s'il se produit de la corrosion à la surface de l'anode. Dans le matériau d'électrode selon l'invention, cette perte en fer du matériau cermet est compensée du fait que du fer va se déplacer du coeur métallique vers le matériau cermet, notamment via des défauts cationiques dans les structures des oxydes que comprend ledit matériau cermet (et ce du fait de phénomènes d'oxydation). Le fer du coeur métallique va alors entrer dans la phase d'oxyde de ferrite de nickel du matériau cermet et ainsi assurer le maintien de la composition de cette phase, donc de la résistance à la corrosion et de la conductivité électrique de cette phase d'oxyde de ferrite de nickel. En d'autres termes, grâce à cet approvisionnement, le fer du coeur métallique maintient la zone « tampon chimique» que constitue le matériau cermet.

Ainsi, le fer du coeur métallique est essentiel à la régénération du matériau cermet.

Aussi, la borne inférieure de 15 % et la borne supérieure de 60 % du pourcentage massique du fer dans le coeur métallique ont été choisies pour éviter de dégrader :
- le coeur métallique lors du déplacement du fer hors du coeur métallique,
- le matériau cermet lors de la fabrication du matériau d'électrode (à savoir éviter une trop forte réaction de type réaction d'oxydo-réduction au cours de l'étape de frittage durant le procédé de fabrication) et/ou au cours de l'électrolyse qui pourrait avoir pour conséquence que la composition du matériau cermet ne présente plus les caractéristiques techniques détaillées ci-dessus .

Si le fer se déplace trop rapidement hors du coeur métallique, cela peut entraîner des hétérogénéités, voire des zones dépourvues de fer dans l'alliage de Ni-Fe du coeur métallique. Le déplacement du fer se produit surtout aux joints de grains du coeur métallique. Cela a pour conséquence une décohésion des grains sur des longues durées, laissant donc des zones très appauvries en fer.

C'est pourquoi, il est essentiel de réguler correctement le flux de fer pour :
- éviter un trop rapide apprauvrissement du coeur métallique en fer qui pourrait créer ces zones apprauvries en fer fragilisant ainsi le coeur métallique et, donc par voie de conséquence l'anode, et
- régénérer le matériau cermet au fur et à mesure de l'électrolyse.

Ainsi, outre la sélection appropriée de la quantité de fer dans le coeur métallique, il a aussi été nécessaire d'optimiser la quantité de nickel qu'il contient.

Le nickel confère la réfractorité à l'alliage de Ni-Fe (à savoir le maintien mécanique en température) et sa résistance à l'oxydation. En effet, la résistance à l'oxydation du coeur métallique augmente avec la teneur en nickel.

Il s'est avéré qu'un pourcentage massique en nickel compris entre 40 % et 85 % est particulièrement avantageux et parfaitement en adéquation avec l'intervalle précité du pourcentage massique de fer pour :
- éviter que le coeur métallique du matériau d'électrode selon l'invention s'appauvrisse trop en fer au cours du temps, entraînant une concentration en nickel importante à la surface du coeur métallique, et ainsi la formation de NiO, voire de NiF₂ en présence d'oxygène et de fluor. Or, le NiO et NiF₂ sont peu conducteurs.
- réguler de manière optimale le flux de fer hors du coeur métallique de manière à alimenter le matériau cermet en ce métal, eu égard au fait que s'il n'y a pas assez de nickel, le fer risque de partir trop rapidement du coeur métallique. Mais, au contraire, s'il y a trop de nickel, le fer n'alimentera plus suffisamment le matériau cermet de manière à le régénérer en fer.

Le coeur métallique du matériau d'électrode selon l'invention présente l'avantage de maintenir localement un potentiel réducteur qui contrecarre le potentiel oxydant du matériau cermet du côté du bain cryolithique, ledit potentiel oxydant étant lié à la réaction d'électrolyse dans le bain cryolithique dans lequel est immergée une anode inerte fabriquée à partir du matériau d'électrode selon l'invention.

La composition du coeur métallique a été sélectionnée soigneusement de telle sorte que la détérioration du coeur métallique du matériau d'électrode selon l'invention soit évitée par oxydation et/ou fluoration.

En d'autres termes, si le matériau d'électrode ne comprenait pas un coeur métallique contenant du fer, il se produirait une oxydation interne qui permettrait la diffusion de fluor au point de modifier la micro-structure dudit matériau, ainsi que ses propriétés de conductivité électrique. Cela aurait pour conséquence, si le matériau est utilisé en tant qu'anode inerte, de le détruire complètement au cours d'une électrolyse.

De plus, le coeur métallique garantit une bonne stabilité mécanique (autrement dit une solidité) du matériau d'électrode selon l'invention qui est adéquate pour le manipuler dans les applications industrielles auxquelles il est destiné.

Dans un mode de réalisation de l'invention, le coeur métallique du matériau d'électrode comprend en outre du cuivre (Cu) dans les proportions massiques suivantes : 5 % ≤ Cu ≤ 40 %.

Préférentiellement dans ce mode de réalisation de l'invention, les proportions massiques du coeur métallique sont les suivantes :
- 40 % ≤ Ni ≤ 70 % ;
- 20 % ≤ Fe ≤ 45 % ;
- 7 % ≤ Cu ≤ 20 %.

Le cuivre est un métal plus noble que le nickel qui va donc s'oxyder après le nickel. Ainsi, la présence de cuivre dans la composition du coeur métallique contribue au maintien de la zone tampon chimique précitée dans le matériau cermet.

Cependant, la quantité de cuivre sera choisie de manière appropriée et, pour ce faire n'excédera pas 40 %, afin d'éviter tout risque de diffusion trop rapide du cuivre hors du coeur métallique et par voie de conséquence hors du matériau d'électrode. En effet, le cuivre peut réagir avec l'alumine dissoute dans le bain cryolithique de manière à former des aluminates de cuivre qui sont fortement solubles dans ce bain et qui vont donc le contaminer.

Dans un autre mode de réalisation de l'invention, le coeur métallique du matériau d'électrode comprend en outre au moins un métal A, ledit métal A étant choisi parmi le chrome (Cr), le cobalt (Co), le manganèse (Mn) et le molybdène (Mo), la proportion massique en le métal A dans le coeur métallique étant la suivante : 0,5 % ≤ A ≤ 30 %.

De manière avantageuse, lorsque le coeur métallique comprend en outre au moins un métal A, les proportions massiques sont les suivantes :
- 40 % ≤ Ni ≤ 80 % ;
- 15 % ≤ Fe ≤ 40 % ;
- 0 ≤ Cu ≤ 20 % ;
- 0,5 % ≤ A ≤ 15 %.

Préférentiellement, lorsque le métal A est Mo, la proportion massique en Mo est la suivante : 0,5 % ≤ Mo ≤ 10 %.

Préférentiellement, lorsque le métal A est Cr ou Mn, la proportion massique en Cr ou Mn est la suivante : 5 % ≤ Cr ou Mn ≤ 15 %.

La présence du métal A dans la composition du coeur métallique présente l'avantage d'être à l'origine de la formation de couches d'oxydes mixtes dans ledit coeur métallique qui contribuent à réguler le déplacement du fer du coeur métallique vers le matériau cermet. Or, comme cela a été expliqué ci-dessus, la régulation du flux du fer au sein du matériau d'électrode selon l'invention est importante pour l'optimisation de l'utilisation de l'anode inerte fabriquée à partir d'un tel matériau.

Si la quantité de métal A dans le coeur métallique excède 30 %, il risque de se former des fluorures ou des oxyfluorures solubles qui pourraient contaminer le bain cryolithique. Ainsi, la quantité de métal A sera adaptée afin d'éviter la formation des fluorures et des oxyfluorures solubles.

Dans un autre mode de réalisation de l'invention, le coeur métallique comprend en outre au moins un métal M' choisi parmi les mêmes métaux M listés ci-dessus dans la description de la composition de la phase d'oxyde de ferrite de nickel du matériau cermet, à savoir ledit métal M' est choisi parmi l'aluminium (Al), le cobalt (Co), le chrome (Cr), le manganèse (Mn), le titane (Ti), le zirconium (Zr), l'étain (Sn), le vanadium (V), le niobium (Nb), le tantale (Ta) et l'hafnium (Hf) ou est une combinaison de ces métaux, la proportion massique en le métal M' dans le coeur métallique étant la suivante : 0,5 % ≤ M' ≤ 10 %.

De manière avantageuse, lorsque le coeur métallique comprend en outre au moins un métal M', les proportions massiques sont les suivantes :
- 40 % ≤ Ni ≤ 80 % ;
- 15% ≤ Fe ≤ 40% ;
- 0 ≤ Cu ≤ 20 % ;
- 0 ≤ A ≤ 20 % ;
- 0,5 % ≤ M' ≤ 5 %.

La présence du métal M' dans la composition du coeur métallique présente l'avantage de pouvoir alimenter en ce métal M' la phase d'oxyde de ferrite de nickel qui peut perdre, au cours de l'électrolyse, une partie des métaux M tels que décrits ci-dessus qu'elle comprend dans sa composition. En d'autres termes, le métal M' peut se déplacer du coeur métallique vers le matériau cermet pour compenser les pertes en le métal M de la phase d'oxyde de ferrite de nickel. Cette régénération au cours de l'électrolyse de la phase d'oxyde de ferrite de nickel améliore ainsi la résistance à l'oxydation à haute température du matériau cermet.

De manière avantageuse, le coeur métallique comprend au moins un métal M' qui est identique au métal M de la phase d'oxyde de ferrite du matériau cermet.

De manière tout à fait avantageuse, le ou les métaux M' du coeur métallique sont identiques à ou aux métaux M de la phase d'oxyde de ferrite de nickel du matériau cermet.

Alors, dans ce mode de réalisation, la présence du métal M' dans la composition du coeur métallique présente l'avantage de pouvoir réalimenter en ce métal la phase d'oxyde de ferrite de nickel qui peut perdre, au cours de l'électrolyse, une partie de ce métal qu'elle comprend sa composition. En d'autres termes, au cours de l'électrolyse, le métal M' présent initialement dans la composition du coeur métallique va être transporté dans la phase d'oxyde de ferrite de nickel du matériau cermet afin de compenser les pertes en le métal M que ladite phase d'oxyde de ferrite de nickel comprend. Comme expliqué ci-dessus, la régénération au cours de l'électrolyse de la phase d'oxyde de ferrite de nickel améliore ainsi la résistance à l'oxydation à haute température du matériau cermet.

Tout comme le métal A, la quantité en le métal M' devra être choisie de manière appropriée pour éviter le risque de formation de fluorures ou d'oxyfluorures solubles dans le bain cryolithique. C'est pourquoi, afin d'éviter ce problème de la formation des fluorures ou des oxyfluorures, le pourcentage massique en le métal M' n'excédera pas 10 %.

Au vu des listes respectives des métaux A et M' détaillées ci-dessus, il convient de noter que le cobalt (Co), le chrome (Cr) et le manganèse (Mn) peuvent faire partie à la fois des métaux A et des métaux M'.

En effet, selon leur quantité dans le coeur métallique et selon la composition initiale de la phase d'oxyde de ferrite de nickel du matériau cermet, ces métaux Co, Cr et Mn pourront :
- être à l'origine de la formation de couches d'oxydes mixtes dans le coeur métallique, c'est-à-dire exercer la fonction des métaux A décrite ci-dessus et/ou
- alimenter ou réalimenter la phase d'oxyde de ferrite de nickel en ce métal M', c'est-à-dire exercer la fonction des métaux M' décrite ci-dessus.

Dans un mode de réalisation de l'invention, le coeur métallique peut en outre comprendre au moins une terre rare, de préférence une terre rare choisie parmi l'yttrium (Y), le cérium (Ce), le lanthane (La) et le néodyme (Nd). La terre rare peut représenter jusqu'à 5 % de la masse du coeur métallique. Plus préférentiellement, ce pourcentage massique en terre rare est inférieur ou égal à 3 %.

Les terres rares présentes dans le coeur métallique du matériau d'électrode selon l'invention contribuent à augmenter la résistance à l'oxydation de l'alliage Ni-Fe.

Les caractéristiques techniques du matériau cermet que comprend le matériau d'électrode selon l'invention sont maintenant plus amplement détaillées.

Grâce à la sélection d'une composition du matériau cermet telle que détaillée ci-dessus, ledit matériau cermet s'avère particulièrement résistant à la corrosion sous polarisation.

En outre, le matériau cermet protège le coeur métallique et, du fait de cette protection, il contribue au maintien de la conductivité électrique du matériau d'électrode selon l'invention. En effet, dans le matériau d'électrode selon l'invention, la conductivité électrique de l'anode est due en grande partie au coeur métallique que ledit matériau d'électrode comprend.

Par ailleurs, la composition du matériau cermet telle que décrite ci-desssus a été soigneusement sélectionnée pour éviter les problèmes de dégradation aux joints de grains de ce matériau et l'infiltration du bain cryolithique vers le coeur métallique, ainsi que pour conserver une bonne conductivité électrique (à savoir supérieure à 80 Siemens (S)/cm).

De préférence, l'épaisseur du matériau cermet qui forme la couche externe du matériau d'électrode selon l'invention (et dont est au moins recouvert le coeur métallique) est supérieure ou égale à 1 mm, plus préférentiellement comprise entre 2 et 8 mm. Une telle épaisseur est avantageuse pour conférer au matériau cermet un rôle de tampon chimique déjà mentionné ci-dessus, c'est-à-dire une fonction de protection du coeur métallique conjuguée à une bonne résistance à la corrosion, ainsi qu'à une conductivité électrique appropriée au cours de la durée de vie de l'anode inerte.

Ainsi, dans le matériau d'électrode selon l'invention, le matériau cermet n'est pas une simple couche de revêtement du coeur métallique mais représente un élément essentiel de ce matériau d'électrode et présente une certaine épaisseur pour l'optimisation de ses différentes fonctions.

C'est pourquoi, le matériau cermet est suffisamment épais pour :
1) exhiber un efficace pouvoir de rétention : à savoir d'une part préserver le fer au sein du matériau d'électrode et d'autre part éviter que de l'oxygène ou du fluor présents dans le bain cryolithique ne vienne dégrader le coeur métallique,
2) se maintenir en l'état au cours de l'utilisation du matériau d'électrode, par exemple pour son utilisation en tant qu'anode inerte lors de la fabrication d'aluminium.

En d'autres termes, il convient de prévoir une épaisseur du matériau cermet telle que sa dissolution lente (et inévitable) au cours du temps n'en modifie pas fondamentalement ses propriétés détaillées ci-dessus, à savoir notamment de ralentissement et de limitation de l'infiltration du bain cryolithique dans le coeur métallique.

En outre, le matériau cermet est aussi relativement fin pour qu'il puisse être régénéré en fer de façon homogène sur toute son épaisseur de manière à assurer une utilisation optimale de l'anode inerte fabriquée à partir du matériau d'électrode selon l'invention, à savoir au cours de la fabrication d'aluminium.

Les différents constituants du matériau cermet et leurs quantités respectives ont été sélectionnés de manière appropriée pour que le matériau cermet et, par voie de conséquence, le matériau d'électrode selon l'invention puissent présenter les avantages qui sont détaillés ci-dessous.

L'oxyde de ferrite de nickel non stoechiométrique (à savoir le ratio atomique de fer sur nickel supérieur à 2) est connu pour être un des oxydes qui conjugue résistance à la corrosion dans un bain cryolithique et conductivité électrique, cette dernière étant fonction dudit ratio atomique de fer sur nickel et variant entre 10 et 100 S.cm⁻¹ à 960 °C.

C'est pourquoi, la composition de la phase d'oxyde de ferrite de nickel sélectionnée dans le cadre de l'invention et qui a été décrite ci-dessus constitue un bon compromis entre la conductivité électrique et la résistance à la corrosion.

La composition du matériau d'électrode détaillée ci-dessus ainsi sélectionnée est particulièrement appropriée pour éviter que la composition de la phase d'oxyde de ferrite de nickel ne varie au cours de l'utilisation de l'anode inerte et tende vers la composition NiFe₂O₄ (à savoir une composition faiblement conductrice). En effet, au cours de l'électrolyse ignée et en surface de l'anode inerte, du fer quitte la phase d'oxyde de ferrite de nickel par oxydation des ions Fe²⁺ en Fe³⁺ et peut donner lieu à la formation de Fe₂O₃ ou d'aluminate de fer ou encore de fluorures de fer qui se dissolvent dans le bain cryolithique. Le déplacement de fer depuis le coeur métallique vers le matériau cermet vise à pallier cette perte en fer de la phase d'oxyde de ferrite de nickel.

La phase d'oxyde de ferrite de nickel du matériau cermet a une structure spinelle. Par structure spinelle, on entend une structure cristalline de composition de type AB2O4 où A est un cation en site tétraédrique (entouré de 4 oxygènes) et B sont deux cations en sites octaédriques (entouré de 6 oxygènes). Ce type de structure cubique compact est particulièrement avantageux dans des conditions agressives telles qu'un bain cryolithique pour la production d'aluminium.

Le fer de la phase d'oxyde de ferrite de nickel assure la conduction électrique du ferrite de nickel par sauts d'électrons entre les ions Fe²⁺ et Fe³⁺ sur les sites octaédriques de la structure spinelle.

De plus, dans les conditions d'électrolyse, cette phase d'oxyde de ferrite de nickel au sein du matériau cermet sélectionné donne lieu à la formation en surface du matériau cermet d'une couche de ferrite de nickel qui est adhésive et cohérente.

En effet, lorsque l'anode inerte est immergée dans un bain cryolithique, la phase d'oxyde de ferrite de nickel a tendance à se dissoudre légèrement de telle sorte qu'il se forme à la surface du matériau cermet une couche d'aluminate (NiAl₂O₄) qui est très peu soluble dans le bain cryolithique. La présence de cette couche d'aluminate ralentit l'insertion de l'oxygène et du fluor présents dans le bain cryolithique dans le matériau cermet et, par conséquent réduit la vitesse d'oxydation dudit matériau cermet, et ainsi contribue à préserver l'intégrité du matériau d'électrode selon l'invention.

Il est à noter que la composition d'oxyde de ferrite de nickel telle que décrite ci-dessus (à savoir NiₓFe_{y}M_{z}O₄ avec 0,60 ≤ x ≤ 0,90 ; 1,90 ≤ y ≤ 2,40 ; 0,00 ≤ z ≤ 0,20) que comprend le matériau d'électrode selon l'invention, est particulièrement appropriée pour l'utilisation de ce matériau en tant qu'anode inerte pour une électrolyse ignée.

En effet, au cours de l'électrolyse, la composition de cette phase d'oxyde de ferrite de nickel va varier légèrement au sein du matériau cermet selon qu'il s'agit d'une partie de ladite phase d'oxyde de ferrite de nickel qui est :
1) à proximité du bain cryolithique (autrement dit quasiment à la surface de l'anode inerte) : x tendra alors vers la valeur de 0,9 ; ce qui est favorable pour la résistance à la corrosion de la phase d'oxyde de ferrite de nickel.
2) à proximité du coeur métallique : x tendra alors vers la valeur de 0,6 ; ce qui est favorable pour la conductivité de la phase d'oxyde de ferrite de nickel ;
3) au coeur du matériau cermet : la valeur x de la phase d'oxyde de ferrite de nickel sera comprise entre 0,7 et 0,8 ; ce qui est particulièrement avantageux, étant donné que cela représente un bon compromis entre la résistance à la corrosion et la conductivité de la phase d'oxyde de ferrite de nickel, et donc par voie de conséquence du matériau cermet.

La conductivité et la résistance à la corrosion de la phase d'oxyde de ferrite de nickel évoluent en fonction de la stoechiométrie de ladite phase d'oxyde de ferrite de nickel, à savoir pour des valeurs de x comprises entre 0,6 et 1:
- la conductivité décroît pour devenir quasi nulle pour x égal à 1,
- alors qu'à l'inverse, la résistance à la corrosion tend à croître avec l'augmentation de x.

C'est pourquoi, il est essentiel d'atteindre un équilibre chimique de cette phase d'oxyde de ferrite de nickel qui constitue un bon compromis dans lequel la conductivité électrique et la résistance à la corrosion sont satisfaisantes. Comme expliqué ci-dessus, la phase d'oxyde de ferrite de nickel exerce alors la fonction de tampon chimique.

Le coeur du matériau cermet constitue la zone active dudit matériau cermet, à savoir qu'elle impose les conditions de mise en équilibre locales du matériau cermet qui doivent freiner et conditionner les transports de matières détaillés ci-dessus.

Par ailleurs, le pourcentage massique de la phase d'oxyde de ferrite de nickel dans le matériau cermet compris entre 45 et 80 % est particulièrement approprié pour que cette phase soit percolante, c'est-à-dire qu'elle entoure complètement les grains de la phase métallique du matériau cermet. De cette manière, cette phase d'oxyde de ferrite de nickel contribue au ralentissement de l'oxydation de la phase métallique du matériau cermet, et donc par voie de conséquence du matériau d'électrode selon l'invention.

De préférence, la phase d'oxyde de ferrite de nickel du matériau cermet représente entre 60 % et 80 % de la masse du matériau cermet.

De manière préférée, la phase d'oxyde de ferrite de nickel du matériau cermet a la composition NiₓFe_{y}M_{z}O₄, avec 0,70 ≤ x ≤ 0,85 ; 2,00 ≤ y ≤ 2,20 ; 0,00 ≤ z ≤ 0,10.

Le choix du métal M que comprend la phase d'oxyde de ferrite de nickel du matériau cermet est maintenant plus amplement détaillé.

Si le métal M est de l'aluminium ou du chrome, cela présente l'avantage de réduire ou ralentir la solubilisation de la phase d'oxyde de ferrite de nickel dans le bain cryolithique. La quantité en aluminium ou en chrome sera choisie de manière appropriée pour éviter que l'élément n'introduise des hétérogénéités dans la composition des oxydes du matériau cermet dans le cas d'une fabrication du matériau d'anode par métallurgie des poudres, eu égard au fait que cet élément diffuse peu au cours du frittage lors de la fabrication du matériau cermet.

Les autres métaux M envisagés, par exemple de valences 2+/3+ (tel que Co, Mn), de valence 4+ (tels que Ti, Zr, Sn, V, Nb, Hf), ou de valence 5+ (tel que Ta) présentent l'avantage d'augmenter la conductivité électrique de la phase d'oxyde de ferrite de nickel.

La phase métallique contenant au moins un alliage de Ni-Cu que comprend le matériau cermet participe à :
- la conductivité électrique du matériau cermet « initial » (à savoir le matériau cermet tel qu'il est au début de l'utilisation de l'anode inerte), et
- au maintien de la conductivité électrique du matériau cermet, lorsque celui-ci se modifie au cours de l'électrolyse comme cela a été expliqué ci-dessus.

Cette phase métallique comprenant au moins un alliage de Ni-Cu est avantageusement distribuée finement (à savoir avec une taille de particules de cette phase métallique comprise entre environ 10 µm et 50 µm en moyenne) et de manière homogène dans la phase d'oxyde de ferrite de nickel.

L'obtention d'une telle distribution fine et homogène de la phase métallique comprenant au moins un alliage de Ni-Cu dans la phase d'oxyde de ferrite de nickel est parfaitement à la portée de l'homme du métier maîtrisant la métallurgie des poudres.

En d'autres termes, cette phase métallique comprenant au moins un alliage de Ni-Cu est avantageusement entourée par la phase d'oxyde de ferrite de nickel, ce qui, sous polarisation, permet d'éviter qu'elle ne s'oxyde rapidement et ainsi conduise à la formation d'espèces solubles dans le bain cryolithique telles que le NiO qui est en outre moins conducteur.

Ainsi, cette distribution fine et homogène de l'alliage de Ni-Cu dans la phase d'oxyde de ferrite de nickel présente l'avantage de maintenir des conditions réductrices qui s'opposent aux conditions oxydantes du bain cryolithique.

Un pourcentage massique de la phase métallique (ladite phase métallique comprenant au moins un alliage de Ni-Cu) du matériau cermet qui est compris entre 15 % et 45 % est particulièrement approprié pour maintenir un potentiel réducteur permettant la coexistence durable des différentes phases du matériau cermet.

De manière préférée, ladite phase métallique comprenant au moins un alliage de Ni-Cu représente entre 25 % et 35 % de la masse du matériau cermet.

Préférentiellement, dans l'alliage de Ni-Cu que comprend au moins ladite phase métallique du matériau cermet, les proportions massiques en Ni et Cu sont les suivantes : 20 % ≤ Ni ≤ 90 % et 10 % ≤ Cu ≤ 80 %, et de préférence encore 50 % ≤ Ni ≤ 90 % et 10 % ≤ Cu ≤ 50 %.

Le nickel de l'alliage de Ni-Cu de la phase métallique va s'oxyder en premier et protège ainsi le cuivre de cette phase de l'oxydation. L'oxydation de cette phase métallique comprenant au moins un alliage de Ni-Cu qui est riche en nickel provoque la formation d'une phase NiO ou l'insertion du nickel dans la phase oxyde ferrite de nickel, ce qui le fixe localement, alors qu'à contrario, si le cuivre s'oxyde, il diffuse rapidement ce qu'il convient bien entendu d'éviter.

Cela justifie pourquoi dans la phase métallique comprenant au moins l'alliage de Ni-Cu du matériau cermet, il est avantageux que le nickel soit majoritaire, et ce pour qu'il s'oxyde sur de longues durées compatibles avec la durée de vie d'une anode inerte utilisée dans la fabrication d'aluminium. De cette manière, cela évite l'oxydation du cuivre de cette phase métallique Ni-Cu qui présenterait les inconvénients détaillés ci-dessus.

Il est à noter que le nickel est très peu soluble dans un bain cryolithique riche en alumine. Le nickel présent à la surface du matériau cermet (donc à la surface du matériau d'électrode selon l'invention) se combine à l'alumine du bain cryolithique et forme ainsi par précipitation de l'aluminate de nickel NiₓFe_{y}Al_{3-x-y}O₄ très peu soluble. La présence de cette phase d'aluminate de nickel ainsi formée participe à limiter l'entrée de fluor et d'oxygène dans le matériau d'électrode.

Ainsi, le cuivre (élément noble) de cette phase métallique Ni-Cu va demeurer dans le matériau cermet sur de longues durées. Cela présente l'avantage de disposer de conditions réductrices qui permettent de maintenir la composition de la phase d'oxyde de ferrite de nickel, et donc de bénéficier du compromis adéquat entre la résistance à la corrosion dans le bain cryolithique et la conductivité électrique qui a été mentionné ci-dessus et qu'il convient de satisfaire pour une optimisation de l'utilisation d'une anode inerte lors de la fabrication d'aluminium.

Le pourcentage massique en cuivre compris entre 10 % et 80 %, et de préférence entre 10 % et 50 %, dans l'alliage Ni-Cu de la phase métallique du matériau cermet est particulièrement approprié pour que le cuivre soit présent tout au long de l'électrolyse mais aussi en quantité assez faible pour éviter l'exsudation lorsque l'anode est préparée par métallurgie des poudres, eu égard au fait que la température de frittage susceptible d'être utilisée pour la fabrication de l'anode inerte est supérieure à la température de fusion du cuivre.

Lors dé la mise en équilibre des phases du matériau cermet au cours de la fabrication de l'anode inerte et/ou de l'électrolyse, la phase métallique du matériau cermet qui contient au moins un alliage de Ni-Cu peut en outre comprendre une faible quantité de fer, par exemple un pourcentage massique compris entre 1 % et 2 % par rapport à la masse totale de cette phase métallique. On n'introduit toutefois préférablement pas initialement de fer sous forme métallique comme constituant de départ mis en oeuvre pour la fabrication du matériau cermet, afin d'éviter son oxydation au cours de l'élaboration du matériau d'électrode et/ou lors de l'électrolyse qui engendrerait sa dissolution dans le bain cryolithique, créant ainsi des porosités dans le matériau d'électrode.

Dans un mode de réalisation de l'invention, la phase métallique du matériau cermet comprend en outre de l'or (Au) et/ou de l'argent (Ag), le pourcentage massique en ces métaux Au et/ou Ag n'excède pas 5 % de la masse de ladite phase métallique du matériau cermet. De préférence, ledit pourcentage massique en ces métaux Au et/ou Ag représente entre 2 % et 3 % de la masse de ladite phase métallique du matériau cermet.

Selon un mode de réalisation de l'invention, le matériau cermet comprend en outre une phase monoxyde de composition Ni_{x'}Fe_{1-x'}O avec 0,70 ≤ x' ≤ 1,00, de préférence avec 0,75 ≤ x' ≤ 0,85. Le pourcentage massique de cette phase monoxyde par rapport à la masse du matériau cermet est de préférence inférieur à 10 %.

Ainsi, dans le cadre de la présente invention, si x' est égal à 1, ladite phase monoxyde que peut éventuellement comprendre le matériau cermet est NiO (à savoir le monoxyde de nickel).

Cette phase monoxyde du matériau cermet permet aussi d'éviter, suite à l'oxydation du ferrite de nickel, la formation de Fe₂O₃ qui est très soluble dans un bain cryolithique.

Par ailleurs, lorsque l'anode inerte est préparée par métallurgie des poudres, si l'on utilise du NiO comme constituant de départ dans la composition du matériau cermet au cours de la préparation du matériau d'électrode selon l'invention, il sera avantageux d'en adapter la quantité mise en oeuvre pour que cette phase monoxyde qui, rappelons-le, est susceptible d'être présente dans le matériau cermet contribue à la densification du matériau d'électrode.

En outre, cette phase monoxyde telle que détaillée ci-dessus est susceptible de contenir du fer qui peut provenir, par exemple, de la ferrite mise en oeuvre au cours du frittage lors de la fabrication du matériau cermet. La présence de fer résultera essentiellement des interactions chimiques entre les différentes phases du matériau cermet du matériau d'électrode selon l'invention au cours de sa préparation.

Il est à noter que du monoxyde de nickel (NiO) peut se former dans le matériau cermet par oxydation interne au cours de l'électrolyse lors de la production d'aluminium du fait que le matériau cermet comprend au moins une phase d'oxyde de ferrite de nickel et une phase métallique comprenant au moins un alliage de Ni-Cu telles que décrites ci-dessus. Le monoxyde de nickel est beaucoup moins conducteur (1 à 2 S.cm⁻¹ à 960 °C) que la phase d'oxyde de ferrite de nickel, d'où la nécessité d'en limiter la quantité.

En d'autres termes, au cours de l'électrolyse, le matériau cermet est susceptible de contenir du NiO, et ce même si ce monoxyde ne faisait pas partie des constituants de départ mis en oeuvre pour la fabrication du matériau cermet (autrement dit, même si le NiO n'était pas présent dans la composition initiale du matériau cermet du matériau d'électrode selon l'invention).

Dans un mode de réalisation de l'invention, le matériau cermet comprend en outre au moins une phase d'oxyde de terre rare. L'oxyde de terre rare de cette phase est avantageusement choisi parmi Y₂O₃, CeO₂, La₂O₃ et Nd₂O₃. Cette phase d'oxydes de terre rare peut représenter au maximum 5 % de la masse du matériau cermet. De préférence, le pourcentage massique de cette phase d'oxyde(s) de terre rare est inférieur ou égal à 3 % de la masse de matériau cermet.

La présence d'une phase d'oxyde de terre rare dans la composition du matériau cermet contribue à améliorer la qualité des joints de grains. De plus, cette phase d'oxyde de terre rare bloque le fluor du bain cryolithique en formant des fluorures et évite ainsi l'insertion en profondeur de fluor au sein de l'anode inerte au cours de l'électrolyse ce qui contribuerait à la dégrader.

Le matériau d'électrode selon la présente invention peut également comprendre une ou plusieurs couches d'accommodation ou aussi appelées « couches intermédiaires » qui sont disposées entre le coeur métallique et le matériau cermet.

En d'autres termes, dans ce mode de réalisation de l'invention, le coeur métallique du matériau d'électrode est recouvert de couche(s) intermédiaire(s), ainsi que d'un matériau cermet. Et, comme expliqué ci-dessus, le matériau cermet forme la couche externe du matériau d'électrode qui est destinée à être en contact avec un bain cryolithique, à savoir lorsque l'anode inerte fabriquée à partir de ce matériau d'électrode est immergée dans un bain cryolithique au cours d'une électrolyse.

Il est en effet avantageux que le matériau d'électrode selon l'invention comprenne entre le coeur métallique et le matériau cermet au moins une couche intermédiaire.

De manière préférée, la couche intermédiaire comporte au moins du nickel et est majoritairement métallique.

Ainsi dans un mode de réalisation de l'invention, le matériau d'électrode comprend en outre au moins une couche intermédiaire disposée entre le coeur métallique et le matériau cermet, ladite couche intermédiaire comportant au moins du nickel et étant majoritairement métallique.

La couche intermédiaire aide à accommoder les contraintes mécaniques dues aux différences de coefficients de dilatation du coeur métallique et du matériau cermet que comprend le matériau d'électrode selon l'invention.

De plus, la couche intermédiaire contribue à maintenir la composition de la phase d'oxyde de ferrite de nickel du matériau cermet décrite ci-dessus. En effet, la couche intermédiaire va réguler le transport du fer du coeur métallique vers le matériau cermet, du fait qu'elle comprend notamment du nickel qui limite le déplacement du fer.

L'épaisseur de la couche intermédiaire peut être comprise entre une centaine de microns et environ un millimètre.

La couche intermédiaire est, par exemple, une couche de nickel d'une épaisseur comprise entre 200 et 300 µm qui a, par exemple, été déposée par électrodéposition sur le coeur métallique du matériau d'électrode selon l'invention.

Cette couche intermédiaire est, par exemple, une couche d'un matériau cermet (c'est-à-dire un matériau qui comprend au moins une phase céramique et au moins une phase métallique) qui comprend en volume plus de 50 % d'une phase métallique comportant au moins du nickel. Par exemple, cette phase métallique est un alliage de Ni-Cu.

La couche intermédiaire peut agir conjointement avec le matériau cermet dans sa fonction de « zone tampon » détaillée ci-dessus. C'est pourquoi, de manière avantageuse, lorsque le matériau d'électrode selon l'invention comprend au moins une couche intermédiaire, l'épaisseur totale du matériau cermet et de la couche intermédiaire est supérieure ou égale à 1 mm, ledit matériau cermet ayant une épaisseur d'au moins 0,5 mm.

Les compositions des différentes phases du matériau d'électrode peuvent être calculées à l'aide d'un logiciel de thermodynamique et vérifiées expérimentalement via des mesures à la microsonde de Castaing ou par EDX (Energy Dispersive X-ray spectrometry) sur photographies MEB (à savoir l'abréviation de « microscope électronique à balayage »).

Le procédé de fabrication du matériau d'électrode décrit ci-dessus comprend au moins les étapes suivantes :
- On prépare le coeur métallique du matériau d'électrode décrit ci-dessus, par exemple, selon une méthode choisie parmi la coulée, le moulage (de préférence, le moulage à cire perdue ou le moulage en sable), ou une technique de transformation à chaud telle que le laminage, l'extrusion ou encore par métallurgie des poudres.
- Optionnellement, on effectue sur le coeur métallique le dépôt d'au moins une couche intermédiaire telle que décrite ci-dessus.
- On effectue sur le coeur métallique, le cas échéant sur la dernière couche intermédiaire déposée, le dépôt du matériau cermet tel que décrit ci-dessus,
   ledit dépôt de matériau cermet pouvant être réalisé par une méthode choisie parmi :
   - les méthodes de projection, par exemple :
      ▪ projection plasma,
      ▪ projection par flamme supersonique (HVOF, acronyme de « High Velocity Oxy-Fuel »),
      ▪ projection haute pression par flamme supersonique (HPVOF, acronyme de « High-Pressure High Velocity Oxi-Fuel »),
      ▪ projection par air supersonique (HVAF, acronyme de "High Velocity Air Fuel"),
      ▪ canon à détonation,
      ▪ projection à froid,
   - ou les méthodes de métallurgie des poudres.

Par méthode de métallurgie des poudres, on entend un procédé qui comprend une succession d'étapes de compaction uniaxiale ou isostatique (à froid ou à chaud) d'un mélange de poudres qui sont suivies d'un traitement thermique (frittage) sous atmosphère contrôlée.

Le dépôt de la couche intermédiaire peut être réalisée par toute technique de dépôt parfaitement à la portée de l'homme du métier. Par exemple, on peut citer l'immersion, la pulvérisation, la peinture, le brossage, la projection (notamment toutes les techniques de projection thermique qui ont été détaillées ci-dessus pour le dépôt du matériau cermet), l'électrodéposition, le dépôt chimique en phase vapeur, le dépôt physique en phase vapeur. La présente liste de techniques de dépôt de la couche intermédiaire n'est nullement limititative. Toute technique équivalent parfaitement à la portée de l'homme du métier peut être envisagée.

De manière avantageuse, avant le dépôt du matériau cermet ou, le cas échéant d'une première couche intermédiaire, on réalise un pré-traitement (par exemple un grenaillage ou un sablage) sur la surface du coeur métallique de manière à éliminer les éventuelles impuretés, par exemple celles issues du procédé de coulée et à augmenter l'adhérence du dépôt qui suit (à savoir le dépôt du matériau cermet ou bien d'une première couche intermédiaire).

Le coeur métallique, les éventuelles couches intermédiaires et le matériau cermet sont réalisés par co-frittage ou par fabrication additive.

On peut également avoir recours aux procédés laser (par exemple soudage au laser ou frittage laser) pour fabriquer le matériau d'électrode selon l'invention.

Bien entendu, le procédé de fabrication du matériau d'électrode sera adapté en fonction de l'utilisation dudit matériau, par exemple s'il est utilisé en tant qu'anode inerte dans un bain cryolithique au cours de la production d'aluminium.

En particulier, le choix de sa forme, de ses dimensions, de la composition du coeur métallique métallique, ainsi que du matériau cermet et de ses éventuelles couches intermédiaires seront effectués en fonction de l'utilisation à laquelle on destine le matériau d'électrode selon l'invention.

La préparation du coeur métallique, ainsi que la technique du dépôt des éventuelles couches intermédiaires et du matériau cermet sont parfaitement à la portée de l'homme du métier car elles mettent en oeuvre des techniques bien connues de celui-ci.

En outre, il convient de noter que les différentes techniques mentionnées ci-dessus tant pour la préparation du coeur métallique que du dépôt des éventuelles couches intermédiaires et du matériau cermet peuvent être mises en oeuvre séparément ou de manière combinée.

Il est important qu'à l'issue de la fabrication du matériau d'électrode selon l'invention, la surface externe dudit matériau d'électrode soit recouverte uniformément d'une couche dense (à savoir qui présente avantageusement une porosité inférieure ou égale à 5 %) et adhérente du matériau cermet tel que décrit ci-dessus.

L'anode inerte fabriquée à partir du matériau d'électrode selon l'invention est particulièrement appropriée pour être utilisée dans la fabrication d'aluminium, par exemple par un procédé d'électrolyse ignée.

Plus précisément, l'anode inerte selon l'invention est conçue pour résister aux bains cryolithiques classiquement utilisés dans le domaine de la production de l'aluminium, à savoir des bains cryolithiques pouvant présenter des densités de courant comprises entre environ 0,5 et environ 1,2 A/cm², et ce dans une gamme de températures comprises entre environ 880 °C et 980 °C.

En effet, l'anode inerte présente une très bonne conductivité (supérieure à 80 S/cm) et est particulièrement résistante à la corrosion dans des bains cryolithiques tels que détaillés ci-dessus.

L'anode inerte selon l'invention présente l'avantage d'avoir une durée de vie de plus de 10 000 heures. Cela est particulièrement avantageux d'un point de vue industriel tant pour des raisons de maintenance qu'économiques.

Il est à noter que l'anode inerte fabriquée à partir du matériau d'électrode selon l'invention présente une durée de vie supérieure aux anodes inertes réalisées exclusivement en un matériau cermet.

### DESCRIPTION DE L'UNIQUE FIGURE

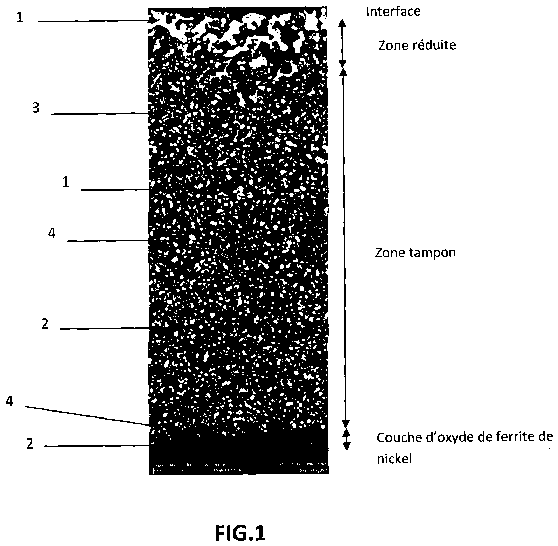

La figure 1 est une photographie d'une observation par MEB en électrons rétrodiffusés d'une partie de l'anode inerte de l'exemple 3 selon l'invention.

### PARTIE EXPERIMENTALE

Des exemples de matériaux d'électrode d'une part comparatifs par rapport à l'invention et d'autre part selon l'invention, ainsi que leur utilisation en tant qu'anode inerte au cours d'une électrolyse sont décrits ci-dessous.

Pour l'ensemble des expérimentations décrites ci-dessous, les conditions d'électrolyse étaient les suivantes : un bain cryolithique avec un rapport cryolithique égal à 2, le rapport cryolithique étant le ratio en pourcentages molaires de NaF sur AlF₃, avec saturation en Al₂O₃ et 5 % de CaF₂ à une température de 960 °C et avec un courant de 0,8 A/cm².

### I - EXEMPLES COMPARATIFS

### Exemple A : 1^{ier} exemple comparatif d'une anode :

Une anode se présentant sous la forme d'un cylindre de 20 mm de diamètre et formée à partir d'un matériau cermet dont la composition était une phase d'oxyde de ferrite de nickel Ni_{0,9}Fe_{2,3}O₄, autrement dit de l'oxyde de ferrite de nickel pur, a été fabriquée.

On a soumis cette anode pendant 96 heures à une électrolyse dans les conditions telles que décrites ci-dessus.

A l'issue de l'électrolyse, on a constaté que l'anode avait été déformée et présentait une forme générale similaire à celle d'un « diabolo » indiquant que la zone de travail de cette anode avait été l'interface entre le bain cryolithique et l'atmosphère gazeuse.

Cette déformation de l'anode peut s'expliquer par le fait que l'oxyde de ferrite de nickel pur s'oxyde rapidement et devient moins conducteur que le bain cryolithique.

Ainsi, on relève de cet exemple A que l'oxyde de ferrite de nickel pur ne constitue pas un matériau approprié pour la fabrication d'une anode inerte destinée à être utilisée pour une électrolyse ignée en vue de la production d'aluminium.

### Exemple B : 2^{ième} exemple comparatif d'une anode :

Une anode formée uniquement à partir d'un matériau cermet qui contenait en pourcentages massiques :
- 67 % d'une phase d'oxyde de ferrite de nickel de composition : Ni_{0,77}Fe_{2,19}Al_{0,04}O₄ ;
- 2 % d'une phase de NiO ;
- 2 % de Y₂O₃ ;
- 29 % d'une phase métallique d'un alliage de Ni-Cu comprenant, en pourcentages massiques, 85 % de nickel et 15 % de cuivre.
a été testée pendant 360 heures dans les conditions d'électrolyse détaillées ci-dessus.

Il convient de noter que dans cet exemple B, le matériau cermet de cette anode correspond à un matériau cermet tel que décrit ci-dessus, à savoir un matériau cermet que peut comprendre le matériau d'électrode selon l'invention.

A l'issue des 360 heures, on a relevé par analyse par microscopie électronique à balayage que l'anode présentait alors une micro-structure très poreuse.

De plus, à la surface de l'anode, la phase métallique avait complètement disparu, et ce sur une épaisseur de 2,9 mm.

Seules les phases d'oxyde de ferrite de nickel et de monoxyde de nickel étaient présentes à la surface de l'anode et étaient distribuées sous la forme d'une superposition de couches parallèles entre elles s'étendant vers la surface de l'anode.

La couche d'oxyde de ferrite de nickel la plus proche de la surface de l'anode avait la composition suivante : NiFe₂O₄, à savoir une composition non-conductrice.

Au bout d'un certain temps, l'anode de cet exemple B n'était plus assez conductrice. En effet, cette anode ne comportait pas de moyen de régénération du fer de la phase d'oxyde de ferrite de nickel qui disparaissait au fur et à mesure de l'électrolyse.

Ainsi, on relève de cet exemple B qu'une anode qui comporte uniquement un matériau cermet tel que décrit ci-dessus n'est pas satisfaisante pour son utilisation au cours d'une électrolyse en vue de la production d'aluminium.

### II - EXEMPLES SELON L'INVENTION

Pour tous les matériaux d'électrode des exemples 1 à 5 selon l'invention qui suivent, le procédé de fabrication a été le suivant :
La fabrication du matériau cermet que comprend le matériau d'électrode selon l'invention a été réalisée de la manière suivante :
1) On a tout d'abord préparé un oxyde de ferrite de nickel de composition NiₓFe₃₋ₓO₄ avec un léger excès de NiO en réalisant les étapes suivantes :
   - on a préparé un mélange qui comprenait 65,8 % de poudre de Fe₂O₃ et 34,2 % de poudre de NiO ;
   - puis, on a soumis le mélange ainsi obtenu à un traitement thermique pendant 5 heures sous air à 1150 °C de manière à obtenir une poudre d'oxyde de ferrite de nickel.
2) Ensuite, de manière à obtenir un matériau cermet qui se présentant sous la forme d'une poudre, on a mélangé cette poudre d'oxyde de ferrite de nickel telle qu'obtenue à l'étape 1) ci-dessus avec des poudres de nickel, de cuivre, d'alumine et optionnellement d'oxyde d'yttrium (selon les compositions détaillées dans les exemples ci-dessous), et ajouté 1 à 5 % de liant organique au mélange.

Ensuite, pour la fabrication de l'anode inerte, on a effectué les étapes suivantes :
- On a pressé la poudre de matériau cermet ainsi obtenue sur une composition de coeur métallique (ladite composition du coeur métallique est détaillée dans chacun des exemples selon l'invention ci-après) ;
- On a fritté (par traitement thermique) sous atmosphère contrôlée jusqu'à une température maximale comprise entre 1100 °C et environ 1350 °C.

Après le frittage, le matériau cermet de l'anode interte contenait les phases suivantes :
- une phase d'oxyde de ferrite de nickel de composition Ni_{0,75}Fe_{2,20}Al_{0,05}O₄,
- une phase monoxyde de composition Ni_{0,85}Fe_{0,15}O,
- une phase métallique d'alliage Ni-Cu comprenant un mélange, en pourcentages massiques, de 85 % de Ni et 15 % de Cu,
- le cas échéant, une à deux phases d'oxyde d'yttrium (selon les compositions - voir dans les exemples selon l'invention ci-après).

### Exemple 1 : 1^{ier} exemple d'une anode selon l'invention :

On a fabriqué une anode inerte à partir d'un matériau d'électrode selon la présente invention qui comprenait :
- un coeur métallique comprenant un mélange de nickel, fer et molybdène dans les proportions massiques suivantes : 80 % de nickel, 15 % de fer et 5 % de molybdène ;
- un matériau cermet d'une épaisseur de 8 mm, ledit matériau cermet contenait en pourcentages massiques :
   - 67 % d'une phase d'oxyde de ferrite de nickel de composition Ni_{0,75}Fe_{2,20}Al_{0,05}O₄ ;
   - 1,5 % d'une phase monoxyde de composition Ni_{0,85}Fe_{0,15}O ;
   - 31 % d'une phase métallique d'alliage de Ni-Cu comprenant un mélange, en pourcentages massiques, de 85 % de nickel et de 15 % de cuivre ;
   - et 0,5 % d'une phase de Y₂O₃.

Il convient de noter que ce matériau cermet correspond à un matériau cermet de même type que celui de l'anode de l'exemple B comparatif, donc comparable du point de vue de ses propriétés physico-chimiques.

Après 96 heures d'électrolyse dans les conditions telles que détaillées ci-dessus, on n'a pas détecté de dommages d'usure sur l'anode de cet exemple 1.

Une couche d'oxyde de ferrite de nickel pur est présente à la surface de l'anode.

Sous cette couche, les trois phases du matériau cermet (à savoir une phase d'oxyde de ferrite de nickel, une phase monoxyde et une phase métallique) sont toujours présentes.

Ces résultats de l'exemple 1 sont bien différents des résultats obtenus avec l'anode de l'exemple B (une anode qui, pour mémoire comprenait uniquement un matériau cermet du même type).

Ainsi, cet exemple 1 démontre l'efficacité du matériau d'électrode selon l'invention. En effet, à partir du matériau d'électrode selon l'invention, on obtient une anode inerte parfaitement appropriée pour son utilisation en électrolyse ignée pour la production d'aluminium.

En outre, au vu des résultats différents obtenus entre l'exemple B et l'exemple 1, cet exemple 1 démontre l'intérêt que le matériau d'électrode comprenne non seulement un matériau cermet mais aussi un coeur métallique.

### Exemple 2 : 2^{ième} exemple d'une anode selon l'invention :

On a fabriqué une anode de diamètre externe 34,4 mm à partir d'un matériau d'électrode selon l'invention, ledit matériau d'électrode comprenait :
- un coeur métallique comprenant un mélange de nickel, fer et cuivre dans les proportions massiques suivantes : 65 % de nickel, 25 % de fer et 10 % de cuivre ;
- un matériau cermet recouvrant sur une épaisseur de 7 mm la paroi latérale du coeur métallique et sur une épaisseur de 16 mm la paroi de fond du coeur métallique.

Ledit matériau cermet contenait en pourcentages massiques :
- 66 % une phase d'oxyde de ferrite de nickel de composition : Ni_{0,75}Fe_{2,20}Al_{0,05}O₄ ;
- 1,5 % une phase monoxyde de composition Ni_{0,85}Fe_{0,15}O ;
- 31 % une phase métallique d'alliage de Ni-Cu comprenant un mélange, en pourcentages massiques, de 85 % de nickel et de 15 % de cuivre ;
- et 1,5 % d'une phase de Y₂O₃.

De même que pour l'exemple 1, il convient de noter que ce matériau cermet correspond à un matériau cermet de même type que celui de l'anode de l'exemple B comparatif.

On a soumis cette anode de l'exemple 2 à une électrolyse pendant une durée de 96 heures, et ce dans les conditions d'électrolyse telles que décrites ci-dessus.

L'anode de l'exemple 2 a montré un potentiel stable pendant ces 96 heures de test.

De plus, à l'issue de 96 heures d'électrolyse, on a constaté que l'anode était intacte. On a constaté par ailleurs que les trois phases du matériau cermet (à savoir une phase d'oxyde de ferrite de nickel, une phase monoxyde et une phase métallique) étaient toujours présentes.

Ces résultats de l'exemple 2 sont bien différents des résultats obtenus avec l'anode de l'exemple B (une anode qui, pour mémoire comprenait uniquement un matériau cermet du même type).

Ainsi, cet exemple 2 démontre l'efficacité du matériau d'électrode selon l'invention. En effet, à partir du matériau d'électrode selon l'invention, on obtient une anode inerte parfaitement appropriée pour son utilisation en électrolyse ignée pour la production d'aluminium.

En outre, au vu des résultats différents obtenus entre l'exemple B et l'exemple 2, cet exemple 2 démontre l'intérêt que le matériau d'électrode comprenne non seulement un matériau cermet mais aussi un coeur métallique.

En d'autres termes, cet exemple 2 témoigne des interactions bénéfiques entre le coeur métallique et le matériau cermet dans le matériau d'électrode selon l'invention.

### Exemple 3 : 3^{ième} Exemple d'une anode selon l'invention :

On a fabriqué une 3^{ième} anode selon la présente invention de même composition que celle de l'exemple 2 et qui donc est très similaire à celle-ci.

Plus précisément, l'anode de l'exemple 3 se distinguait de celle de l'exemple 2 uniquement par certaines différences au niveau des dimensions, à savoir :
- l'épaisseur du matériau cermet sur la paroi latérale du coeur métallique était de 8 mm ;
- l'épaisseur du matériau cermet sur la paroi de fond du coeur métallique était de 1,2 mm ;
- le diamètre externe de l'anode était de 34,4 mm.

Au bout de 96 heures d'électrolyse, le matériau cermet était toujours présent sur l'anode. De plus, on n'a pas constaté de dommages d'usure de l'anode.

Les trois phases initiales du matériau cermet (à savoir les phases d'oxyde de ferrite de nickel, de monoxyde et métallique) étaient toujours présentes.

Une fine couche d'oxyde de ferrite de nickel de composition Ni_{0,9}Fe_{2,1}O₄ très proche de la composition d'oxyde de ferrite de nickel pur s'était formée à la surface de l'anode et le matériau cermet en-dessous de cette fine couche avaient les compositions suivantes :
- phase d'oxyde de ferrite de nickel de composition Ni_{0,82}Fe_{2,12}Al_{0,05}O₄ ;
- phase monoxyde de composition Ni_{0,8}Fe_{0,2}O.

La phase métallique du matériau cermet contenait toujours du nickel et du cuivre.

En ce qui concerne l'anode inerte de cet exemple 3 selon l'invention, la figure 1 est une photographie d'une observation par MEB en électrons rétrodiffusés d'une partie de cette anode inerte prise après 96 heures d'électrolyse et après l'avoir enrobée de résine, découpée et polie. Plus précisément, la partie photographiée est le matériau cermet que comprend cette anode.

Les caractéristiques de cette observation par MEB étaient les suivantes : micrographie représentant une zone de 460 microns par 1,2 millimètre, au niveau de la paroi du fond de l'anode.

Sur la photographie de la figure 1, on visualise les différentes phases en présence du matériau cermet que sont :
- la phase 1 métallique d'alliage de Ni-Cu (les points blanc),
- la phase 2 d'oxyde de ferrite de nickel NiₓFe_{y}Al_{z}O₄ (les points gris foncé),
- la phase 3 monoxyde Ni_{x'}Fe_{1-x'}O (les points gris clair),
- et les porosités 4 (les points noir).

De plus, sur la figure 1, sont indiquées les différentes limitations :
- « interface »: L'interface entre le matériau cermet et le coeur métallique de l'anode inerte ;
- « zone réduite » : La zone du matériau cermet située entre le coeur du matériau cermet et le coeur métallique de l'anode inerte ;
- « zone tampon » : La zone de tampon chimique du matériau cermet, autrement dit le coeur du matériau cermet ;
- « couche d'oxyde de ferrite de nickel » : Le côté externe du matériau cermet, à savoir la couche du matériau cermet qui était en contact avec le bain cryolithique au cours de l'électrolyse.

On observe que la partie du matériau cermet qui a été en contact avec le bain cryolithique durant l'électrolyse a été transformée en une fine couche d'oxyde de ferrite de nickel dense d'une quarantaine de microns (couleur gris foncé des points sur la figure 1).

La partie du matériau cermet en contact avec le coeur métallique de l'anode inerte présente une proportion importante de métal (couleur blanche des points sur la figure 1), témoignant de la réduction du matériau cermet par le coeur métallique au cours de l'électrolyse.

Enfin, au vu de l'importance de la « zone tampon » sur la figure 1, on relève que la majorité du matériau cermet n'a été que faiblement transformée : malgré la présence de porosités, les trois phases présentes sont toujours visibles et donc toujours présentes après 96 heures d'électrolyse.

### Exemple 4 : 4^{ième} Exemple d'une anode selon l'invention :

On a fabriqué une anode de diamètre externe 24,2 mm à partir d'un matériau d'électrode selon l'invention, ledit matériau d'électrode comprenait :
- un coeur métallique comprenant un mélange de nickel, fer et cuivre dans les proportions massiques suivantes : 65 % de nickel, 25 % de fer et 10 % de cuivre ;
- un matériau cermet d'épaisseur 2 mm,

Ledit matériau cermet contenait en pourcentages massiques :
- 67 % d'une phase d'oxyde de ferrite de nickel de composition :

   Ni_{0.75}Fe_{2,20}Al_{0.05}O₄ ;
- 1 % d'une phase monoxyde de composition Ni_{0,85}Fe_{0,15}O ;
- 32 % d'une phase métallique d'alliage de Ni-Cu comprenant un mélange, en pourcentages massiques, de 85 % de nickel et de 15 % de cuivre.

Après 213 heures d'électrolyse dans les conditions telles que décrites ci-dessus, l'anode selon l'exemple 4 était intacte.

### Exemple 5 : 5^{ième} exemple d'une anode selon l'invention :

On a fabriqué une 5^{ième} anode selon la présente invention de même composition que celle de l'exemple 4 et qui donc est très similaire à celle-ci.

Plus précisément, l'anode de l'exemple 5 se distinguait de celle de l'exemple 4 uniquement par certaines différences au niveau des dimensions, à savoir :
- le diamètre externe de l'anode était de 34 mm ;
- l'épaisseur du matériau cermet était de 8 mm.

Après 404 heures d'électrolyse dans les conditions qui ont été détaillées ci-dessus, on constate que l'anode ne présente que de faibles dommages d'usure.

De plus, le matériau cermet est toujours présent sur l'anode et contient trois phases (à savoir une phase d'oxyde de ferrite de nickel, une phase monoxyde et une phase métallique)

Ces résultats de l'exemple 5 sont bien différents des résultats obtenus avec l'anode de l'exemple B (une anode qui, pour mémoire comprenait uniquement un matériau cermet du même type).

Ainsi, cet exemple 5 démontre l'efficacité du matériau d'électrode selon l'invention. En effet, à partir du matériau d'électrode selon l'invention, on obtient une anode inerte parfaitement appropriée pour son utilisation en électrolyse ignée pour la production d'aluminium.

En outre, au vu des résultats différents obtenus entre l'exemple B et l'exemple 5, cet exemple 5 démontre l'intérêt que le matériau d'électrode comprenne non seulement un matériau cermet mais aussi un coeur métallique.

## Revendications

1. Matériau d'électrode, de préférence matériau d'anode inerte, comprenant au moins un coeur métallique et un matériau cermet, ledit coeur métallique étant au moins recouvert dudit matériau cermet et ledit matériau cermet formant une couche externe dudit matériau d'électrode qui est destinée à être en contact avec un bain d'électrolyse,
**caractérisé en ce que** :
- ledit coeur métallique comprend au moins un alliage de nickel (Ni) et de fer (Fe), les proportions massiques de Ni et de Fe étant les suivantes :
• 40 % ≤ Ni ≤ 85 %, de préférence 55 % ≤ Ni ≤ 80 %,
• 15 % ≤ Fe ≤ 60 %, de préférence 20 % ≤ Fe ≤ 45 %,
- ledit matériau cermet comprend au moins en pourcentages massiques :
• 45 à 80 % d'une phase (2) d'oxyde de ferrite de nickel de composition NiₓFe_{y}M_{z}O₄ avec 0,60 ≤ x ≤ 0,90 ; 1,90 ≤ y ≤ 2,40 ; 0,00 ≤ z ≤ 0,20 et M étant un métal choisi parmi l'aluminium (Al), le cobalt (Co), le chrome (Cr), le manganèse (Mn), le titane (Ti), le zirconium (Zr), l'étain (Sn), le vanadium (V), le niobium (Nb), le tantale (Ta) et l'hafnium (Hf) ou étant une combinaison de ces métaux,
• 15 à 45 % d'une phase (1) métallique comprenant au moins un alliage de nickel et de cuivre.

2. Matériau d'électrode selon la revendication 1, **caractérisé en ce que** le coeur métallique du matériau d'électrode comprend en outre du cuivre (Cu) dans les proportions massiques suivantes 5 % ≤ Cu ≤ 40 %.

3. Matériau d'électrode selon la revendication 2, **caractérisé en ce que** les proportions massiques du coeur métallique sont les suivantes :
- 40 % ≤ Ni ≤ 70 % ;
- 20 % ≤ Fe ≤ 45 % ;
- 7 % ≤ Cu ≤ 20 %.

4. Matériau d'électrode selon l'une quelconque des revendications 1 à 3, **caractérisé en ce que** le coeur métallique du matériau d'électrode comprend en outre au moins un métal A, ledit métal A étant choisi parmi le chrome (Cr), le manganèse(Mn), le cobalt (Co) et le molybdène (Mo), la proportion massique en le métal A dans le coeur métallique étant la suivante : 0,5 % ≤ A ≤ 30 %.

5. Matériau d'électrode selon la revendication 4, **caractérisé en ce que** les proportions massiques du coeur métallique sont les suivantes :
- 40 % ≤ Ni ≤ 80 % ;
- 15 % ≤ Fe ≤ 40 % ;
- 0 ≤ Cu ≤ 20 % ;
- 0,5 % ≤ A ≤ 15 %.

6. Matériau d'électrode selon l'une quelconque des revendications 1 à 5, **caractérisé en ce que** le coeur métallique comprend en outre au moins un métal M' choisi parmi l'aluminium (Al), le cobalt (Co), le chrome (Cr), le manganèse (Mn), le titane (Ti), le zirconium (Zr), l'étain (Sn), le vanadium (V), le niobium (Nb), le tantale (Ta) et l'hafnium (Hf) ou est une combinaison de ces métaux, la proportion massique en le métal M' dans le coeur métallique étant la suivante : 0,5 % ≤ M' ≤ 10 %.

7. Matériau d'électrode selon la revendication 6, **caractérisé en ce que** les proportions massiques du coeur métallique sont les suivantes :
- 40 % ≤ Ni ≤ 80 % ;
- 15 % ≤ Fe ≤ 40 % ;
- 0 ≤ Cu ≤ 20 % ;
- 0 ≤ A ≤ 20 % ;
- 0,5 % ≤ M' ≤ 5 %.

8. Matériau d'électrode selon l'une quelconque des revendications 1 à 7, **caractérisé en ce que** le coeur métallique comprend en outre au moins une terre rare, de préférence une terre rare choisie parmi l'yttrium (Y), le cérium (Ce), le lanthane (La) et le néodyme (Nd).

9. Matériau d'électrode selon l'une quelconque des revendications 1 à 8, **caractérisé en ce que** la phase (2) d'oxyde de ferrite de nickel du matériau cermet a la composition NiₓFe_{y}M_{z}O₄, avec 0,70 ≤ x ≤ 0,85; 2,00 ≤ y ≤ 2,20 ; 0,00 ≤ z ≤ 0,10.

10. Matériau d'électrode selon l'une quelconque des revendications 1 à 9, **caractérisé en ce que** la phase (1) métallique comprenant au moins un alliage de Ni-Cu représente entre 25 % et 35 % de la masse du matériau cermet.

11. Matériau d'électrode selon l'une quelconque des revendications 1 à 10, **caractérisé en ce que** dans l'alliage de nickel et de cuivre que comprend au moins ladite phase (1) métallique du matériau cermet, les proportions massiques en Ni et Cu sont les suivantes: 20 % ≤ Ni ≤ 90 % et 10 % ≤ Cu ≤ 80 %, et de préférence 50 % ≤ Ni ≤ 90 % et 10 % ≤ Cu ≤ 50 %.

12. Matériau d'électrode selon l'une quelconque des revendications 1 à 11, **caractérisé en ce que** le matériau cermet comprend en outre une phase (3) monoxyde de composition Ni_{x'}Fe_{1-x'}O avec 0,70 ≤ x' ≤ 1.

13. Matériau d'électrode selon la revendication 12, **caractérisé en ce que** le pourcentage massique de la phase (3) monoxyde dans le matériau cermet est inférieur à 10 %.

14. Matériau d'électrode selon l'une quelconque des revendications 12 et 13, **caractérisé en ce que** la phase (3) monoxyde à comme composition Ni_{x'}Fe_{1-x'}O avec 0,75 ≤ x' ≤ 0,85.

15. Matériau d'électrode selon l'une quelconque des revendications 1 à 14, **caractérisé en ce que** le matériau cermet comprend en outre au moins une phase d'oxyde de terre rare.

16. Matériau d'électrode selon l'une quelconque des revendications 1 à 15, **caractérisé en ce que** la phase métallique du matériau cermet comprend en outre de l'or (Au) et/ou de l'argent (Ag), le pourcentage massique en ces métaux Au et/ou Ag n'excédant pas 5 % de la masse de ladite phase métallique du matériau cermet.

17. Matériau d'électrode selon l'une quelconque des revendications 1 à 16, **caractérisé en ce que** l'épaisseur du matériau cermet est supérieure ou égale à 1 mm.

18. Matériau d'électrode selon la revendication 17, **caractérisé en ce que** l'épaisseur du matériau cermet est comprise entre 2 et 8 mm.

19. Matériau d'électrode selon l'une quelconque des revendications 1 à 18, **caractérisé en ce qu'**il comprend en outre au moins une couche intermédiaire disposée entre le coeur métallique et le matériau cermet, ladite couche intermédiaire comportant au moins du nickel et étant majoritairement métallique.

20. Matériau d'électrode selon la revendication 19, **caractérisé en ce que** la couche intermédiaire est une couche de nickel d'une épaisseur comprise entre 200 et 300 µm.

## Patentansprüche

1. Elektrodenmaterial, bevorzugt Material einer inerten Anode, das zumindest einen metallischen Kern und ein Cermet-Material umfasst, wobei der metallische Kern zumindest mit dem Cermet-Material beschichtet ist und das Cermet-Material eine Außenschicht des Elektrodenmaterials bildet, die dazu bestimmt ist, in Kontakt mit einem Elektrolysebad zu sein,
**dadurch gekennzeichnet, dass**:
- der metallische Kern zumindest eine Legierung aus Nickel (Ni) und aus Eisen (Fe) umfasst, wobei die Massenanteile von Ni und von Fe wie folgt sind:
• 40 % ≤ Ni ≤ 85 %, bevorzugt 55 % ≤ Ni ≤ 80 %,
• 15 % ≤ Fe ≤ 60 %, bevorzugt 20 % ≤ Fe ≤ 45 %,
- das Cermet-Material in Gewichtsprozent zumindest umfasst:
• 45 bis 80 % einer Oxidphase (2) von Nickelferrit der Zusammensetzung NiₓFe_{y}M_{z}O₄, wobei 0,60 ≤ x ≤ 0,90, 1,90 ≤ y ≤ 2,40, 0,00 ≤ z ≤ 0,20, und wobei M ein Metall ist, das aus Aluminium (AI), Cobalt (Co), Chrom (Cr), Mangan (Mn), Titan (Ti), Zirkonium (Zr), Zinn (Sn), Vanadium (V), Niob (Nb), Tantal (Ta) und Hafnium (Hf) ausgewählt ist oder eine Kombination dieser Metalle ist,
• 15 bis 45 % einer metallischen Phase (1), die zumindest eine Legierung aus Nickel und aus Kupfer umfasst.

2. Elektrodenmaterial nach Anspruch 1, **dadurch gekennzeichnet, dass** der metallische Kern des Elektrodenmaterials ferner Kupfer (Cu) in den folgenden Massenanteilen umfasst: 5 % ≤ Cu ≤ 40 %.

3. Elektrodenmaterial nach Anspruch 2, **dadurch gekennzeichnet, dass** die Massenanteile des metallischen Kerns wie folgt sind:
- 40 % ≤ Ni ≤ 70 %,
- 20 % ≤ Fe ≤ 45 %,
- 7 % ≤ Cu ≤ 20 %.

4. Elektrodenmaterial nach einem der Ansprüche 1 bis 3, **dadurch gekennzeichnet, dass** der metallische Kern des Elektrodenmaterials ferner zumindest
ein Metall A umfasst, wobei das Metall A aus Chrom (Cr), Mangan (Mn), Cobalt (Co) und Molybdän (Mo) ausgewählt ist, wobei der Massenanteil des Metalls A in dem metallischen Kern wie folgt ist: 0,5 % ≤ A ≤ 30 %.

5. Elektrodenmaterial nach Anspruch 4, **dadurch gekennzeichnet, dass** die Massenanteile des metallischen Kerns wie folgt sind:
- 40 % ≤ Ni ≤ 80 %,
- 15 % ≤ Fe ≤ 40%,
- 0 % ≤ Cu ≤ 20 %,
- 0,5 % ≤ A ≤ 15 %.

6. Elektrodenmaterial nach einem der Ansprüche 1 bis 5, **dadurch gekennzeichnet, dass** der metallische Kern ferner zumindest ein Metall M' umfasst, das aus Aluminium (Al), Cobalt (Co), Chrom (Cr), Mangan (Mn), Titan (Ti), Zirkonium (Zr), Zinn (Sn), Vanadium (V), Niob (Nb), Tantal (Ta) und Hafnium (Hf) ausgewählt ist oder eine Kombination aus diesen Metallen ist, wobei der Massenanteil des Metalls M' in dem metallischen Kern wie folgt ist: 0,5 % ≤ M' ≤ 10 %.

7. Elektrodenmaterial nach Anspruch 6, **dadurch gekennzeichnet, dass** die Massenanteile des metallischen Kerns wie folgt sind:
- 40 % ≤ Ni ≤ 80 %,
- 15 % ≤ Fe ≤ 40 %,
- 0 % ≤ Cu ≤ 20 %,
- 0 % ≤ A ≤ 20 %,
- 0,5% ≤ M' ≤ 5%.

8. Elektrodenmaterial nach einem der Ansprüche 1 bis 7, **dadurch gekennzeichnet, dass** der metallische Kern ferner zumindest ein Seltenerdmetall umfasst, bevorzugt ein Seltenerdmetall, das aus Yttrium (Y), Cer (Ce), Lanthan (La) und Neodym (Nd) ausgewählt ist.

9. Elektrodenmaterial nach einem der Ansprüche 1 bis 8, **dadurch gekennzeichnet, dass** die Oxidphase (2) von Nickelferrit des Cermet-Materials die Zusammensetzung NiₓFe_{y}M_{z}O₄ aufweist, wobei 0,70 ≤ x ≤ 0,85, 2,00 ≤ y ≤ 2,20, 0,00 ≤ z ≤ 0,10.

10. Elektrodenmaterial nach einem der Ansprüche 1 bis 9, **dadurch gekennzeichnet, dass** die metallische Phase (1) zumindest eine Legierung aus Ni-Cu umfasst, die zwischen 25 % und 35 % der Masse des Cermet-Materials darstellt.

11. Elektrodenmaterial nach einem der Ansprüche 1 bis 10, **dadurch gekennzeichnet, dass** in der Legierung aus Nickel und aus Kupfer, die zumindest die metallische Phase (1) des Cermet-Materials umfasst, die Massenanteile von Ni und Cu wie folgt sind: 20 % ≤ Ni ≤ 90 % und 10 % ≤ Cu ≤ 80 %, und bevorzugt 50 % ≤ Ni ≤ 90 % und 10 % ≤ Cu ≤ 50 %.

12. Elektrodenmaterial nach einem der Ansprüche 1 bis 11, **dadurch gekennzeichnet, dass** das Cermet-Material ferner eine Monoxidphase (3) der Zusammensetzung Ni_{x'}Fe_{1-x'}O umfasst, wobei 0,70 ≤ x' ≤ 1.

13. Elektrodenmaterial nach Anspruch 12, **dadurch gekennzeichnet, dass** die Gewichtsprozent der Monoxidphase (3) in dem Cermet-Material geringer als 10 % sind.

14. Elektrodenmaterial nach einem der Ansprüche 12 und 13, **dadurch gekennzeichnet, dass** die Monoxidphase (3) Ni_{x'}Fe_{1-x'}O als Zusammensetzung aufweist, wobei 0,75 ≤ x' ≤ 0,85.

15. Elektrodenmaterial nach einem der Ansprüche 1 bis 14, **dadurch gekennzeichnet, dass** das Cermet-Material ferner zumindest eine Oxidphase aus Seltenerdmetall umfasst.

16. Elektrodenmaterial nach einem der Ansprüche 1 bis 15, **dadurch gekennzeichnet, dass** die metallische Phase des Cermet-Materials ferner Gold (Au) und/oder Silber (Ag) umfasst, wobei die Gewichtsprozent dieser Metalle Au und/oder Ag 5 % der Masse der metallischen Phase des Cermet-Materials nicht überschreiten.

17. Elektrodenmaterial nach einem der Ansprüche 1 bis 16, **dadurch gekennzeichnet, dass** die Dicke des Cermet-Materials größer als oder gleich 1 mm ist.

18. Elektrodenmaterial nach Anspruch 17, **dadurch gekennzeichnet, dass** die Dicke des Cermet-Materials zwischen 2 und 8 mm beträgt.

19. Elektrodenmaterial nach einem der Ansprüche 1 bis 18, **dadurch gekennzeichnet, dass** es ferner zumindest eine Zwischenschicht umfasst, die zwischen dem metallischen Kern und dem Cermet-Material angeordnet ist, wobei die Zwischenschicht zumindest Nickel beinhaltet und größtenteils metallisch ist.

20. Elektrodenmaterial nach Anspruch 19, **dadurch gekennzeichnet, dass** die Zwischenschicht eine Schicht aus Nickel mit einer Dicke ist, die zwischen 200 und 300 µm beträgt.

## Claims

1. Electrode material, preferably an inert anode material, comprising at least a metal core and a cermet material, said metal core being at least covered by said cermet material and said cermet material forming an outer layer of said electrode material which is designed to be in contact with an electrolysis bath,
**characterized in that**:
- said metal core contains at least one nickel (Ni) and iron (Fe) alloy, the proportions by weight of Ni and Fe being as follows:
• 40% ≤ Ni ≤ 85%, preferably 55% ≤ Ni ≤ 80%,
• 15% ≤ Fe ≤ 60%, preferably 20% ≤ Fe ≤ 45%,
- said cermet material comprises at least as percentages by weight:
• 45 to 80% of a nickel ferrite oxide phase (2) of composition NiₓFe_{y}M_{z}O₄ with 0.60 ≤ x ≤ 0.90; 1.90 ≤ y ≤ 2.40; 0.00 ≤ z ≤ 0.20 and M being a metal selected from aluminum (Al), cobalt (Co), chromium (Cr), manganese (Mn), titanium (Ti), zirconium (Zr), tin (Sn), vanadium (V), niobium (Nb), tantalum (Ta) and hafnium (Hf) or being a combination of these metals,
• 15 to 45% of a metallic phase (1) comprising at least one nickel-copper alloy.

2. Electrode material according to claim 1, **characterized in that** the metal core of the electrode material further comprises copper (Cu) in the following proportions by weight: 5% ≤ Cu ≤ 40%.

3. Electrode material according to claim 2, **characterized in that** the proportions by weight of the metal core are as follows:
- 40% ≤ Ni ≤ 70%;
- 20% ≤ Fe ≤ 45%;
- 7% ≤ Cu ≤ 20%.

4. Electrode material according to any one of claims 1 to 3, **characterized in that** the metal core of the electrode material further comprises at least one metal A, said metal A being selected from chromium (Cr), manganese (Mn), cobalt (Co) and molybdenum (Mo), the proportion by weight of metal A in the metal core being as follows: 0.5% ≤ A ≤ 30%.

5. Electrode material according to claim 4, **characterized in that** the proportions by weight of the metal core are as follows:
- 40% ≤ Ni ≤ 80%;
- 15% ≤ Fe ≤ 40%;
- 0 ≤ Cu ≤ 20%;
- 0.5% ≤ A ≤ 15%.

6. Electrode material according to any one of claims 1 to 5, **characterized in that** the metal core further comprises at least one metal M' selected from aluminum (Al), cobalt (Co), chromium (Cr), manganese (Mn), titanium (Ti), zirconium (Zr), tin (Sn), vanadium (V), niobium (Nb), tantalum (Ta) and hafnium (Hf) or is a combination of these metals, the proportion by weight of metal M' in the metal core being as follows: 0.5% ≤ M' ≤ 10%.

7. Electrode material according to claim 6, **characterized in that** the proportions by weight of the metal core are as follows:
- 40% ≤ Ni ≤ 80%;
- 15% ≤ Fe ≤ 40%;
- 0 ≤ Cu ≤ 20%;
- 0 ≤ A ≤ 20%;
- 0.5% ≤ M' ≤ 5%.

8. Electrode material according to any one of claims 1 to 7, **characterized in that** the metal core further comprises at least one rare earth element, preferably a rare earth element selected from yttrium (Y), cerium (Ce), lanthanum (La) and neodymium (Nd).

9. Electrode material according to any one of claims 1 to 8, **characterized in that** the nickel ferrite oxide phase (2) of the cermet material has the composition NiₓFe_{y}M_{z}O₄, with 0.70 ≤ x ≤ 0.85; 2.00 ≤ y ≤ 2.20; 0.00 ≤ z ≤ 0.10.

10. Electrode material according to any one of claims 1 to 9, **characterized in that** the metallic phase (1) comprising at least one Ni-Cu alloy represents between 25% and 35% of the weight of the cermet material.

11. Electrode material according to any one of claims 1 to 10, **characterized in that** in the nickel-copper alloy comprising at least said metallic phase (1) of the cermet material, the proportions by weight of Ni and Cu are as follows: 20% ≤ Ni ≤ 90% and 10% ≤ Cu ≤ 80%, and preferably 50% ≤ Ni ≤ 90% and 10% ≤ Cu ≤ 50%.

12. Electrode material according to any one of claims 1 to 11, **characterized in that** the cermet material further comprises a monoxide phase (3) of composition Ni_{x'}Fe_{1-x'}O with 0.70 ≤ x' ≤ 1.

13. Electrode material according to claim 12, **characterized in that** the percentage by weight of the monoxide phase (3) in the cermet material is less than 10%.

14. Electrode material according to either of claims 12 or 13, **characterized in that** the monoxide phase (3) has as composition Ni_{x'}Fe_{1-x'}O with 0.75 ≤ x' ≤ 0.85.

15. Electrode material according to any one of claims 1 to 14, **characterized in that** the cermet material further comprises at least one rare earth oxide phase.

16. Electrode material according to any one of claims 1 to 15, **characterized in that** the metallic phase of the cermet material further comprises gold (Au) and/or silver (Ag), the percentage by weight of these metals Au and/or Ag not exceeding 5% of the weight of said metallic phase of the cermet material.

17. Electrode material according to any one of claims 1 to 16, **characterized in that** the thickness of the cermet material is greater than or equal to 1 mm.

18. Electrode material according to claim 17, **characterized in that** the thickness of the cermet material is between 2 and 8 mm.

19. Electrode material according to any one of claims 1 to 18, **characterized in that** it further comprises at least one intermediate layer disposed between the metal core and the cermet material, said intermediate layer containing at least nickel and being predominantly metallic.

20. Electrode material according to claim 19, **characterized in that** the intermediate layer is a layer of nickel having a thickness of between 200 and 300 µm.
